# FASCICULE DE BREVET EUROPEEN

(11) **EP 0 846 523 B1**
(45) Date de publication et mention de la délivrance du brevet: **13.03.2002**
(21) Numéro de dépôt: 97402914.2
(22) Date de dépôt: 03.12.1997
(51) Int. Cl.: B23Q 1/01

(54) **Machine-outil à portique et à broche verticale**
Portalwerkzeugmaschine und vertikale Spindel
Gantry-type machine tool and vertical spindle

(30) Priorité: 09.12.1996 FR 9615078
(43) Date de publication de la demande: 10.06.1998
(73) Titulaire: HELIS S.A., F-06530 Peymeinade (FR)
(72) Inventeur: Line, Henri, 06530 Peymeinade (FR)
(74) Mandataire: Le Bras, Hervé

(56) Documents cités:
- EP-A- 0 614 724
- FR-A- 2 715 336
- US-A- 4 637 761
- US-A- 5 350 262

## Description

La présente invention concerne les machines-outils de grande capacité et notamment les fraiseuses à broches verticales et portiques mobiles.

Elles concerne plus précisément une machine-outil comportant un banc rigide, un portique présentant deux montants reliés par une traverse supérieure ayant deux faces espacées dans la direction de l'axe X, des moyens pour déplacer le portique sur ledit banc selon l'axe X, deux chariots disposés respectivement sur lesdites faces espacées de la traverse et mobiles selon l'axe Y transversal, un porte-cuirasse supporté par lesdits chariots et mobile selon l'axe Z vertical, une cuirasse montée sur ledit porte-cuirasse de manière mobile selon l'axe X, une broche porte outil portée par ladite cuirasse et susceptible de tourner autour de l'axe Z, et une commande numérique pour commander les déplacements synchronisés des deux chariots selon l'axe Y, le déplacement dudit porte-cuirasse selon l'axe Z et le déplacement de ladite cuirasse par apport audit porte-cuirasse selon l'axe X, afin de permettre un usinage rapide et précis dans une zone tridimensionnelle limitée sans déplacement du portique.

Une telle machine-outil est décrite dans FR-A-2 715 336 dont la Demanderesse est titulaire.

Dans ce document, les chariots sont disposés sur les faces opposées de la traverse et le porte-cuirasse présente selon un plan perpendiculaire à l'axe Y une section en U définie par deux ailes parallèles reliées par une âme disposée sous la traverse, les deux ailes étant montées coulissantes sur les faces opposées des deux chariots.

Cette configuration en U du porte-cuirasse entraîne des déformations mécaniques qui nuisent à la précision de l'usinage, notamment lorsque la distance entre les ailes est calculée pour permettre un fort déplacement de la broche selon l'axe X sans déplacement du portique. Pour y remédier, on est obligé d'augmenter le dimensionnement du porte-cuirasse et par le fait même son poids, ce qui entraîne une augmentation de l'inertie des éléments mobiles et une diminution de la rapidité des déplacements.

Le but de l'invention est de proposer une nouvelle structure du portique et des moyens de montage de la cuirasse sur le portique qui permette de remédier aisément aux déformations du porte cuirasse sans augmentation excessive du poids.

L'invention atteint son but par le fait que la traverse est constituée de deux poutres parallèles espacées dans la direction de l'axe X, lesdites deux poutres présentant des faces internes en vis-à-vis et par le fait que les chariots sont disposés respectivement sur lesdites faces internes et de part et d'autre dudit porte-cuirasse.

Grâce à cette disposition, le porte-cuirasse peut présenter en section une configuration différente d'une configuration en U et être rigidifiée sans augmentation excessive de masse.

Avantageusement, le porte-cuirasse présente deux ailes verticales perpendiculaires à l'axe X, s'étendant à partir d'une base inférieure, et reliées par des éléments de rigidification, lesdites deux ailes étant montées coulissantes respectivement sur les faces en vis-à-vis desdits deux chariots et entraînées en synchronisme par la commande numérique, et la cuirasse est montée coulissante sur ladite base inférieure.

D'autres avantages et caractéristiques de l'invention ressortiront à la lecture de la description suivante faite à titre d'exemple et en référence au dessin annexé dans lequel:

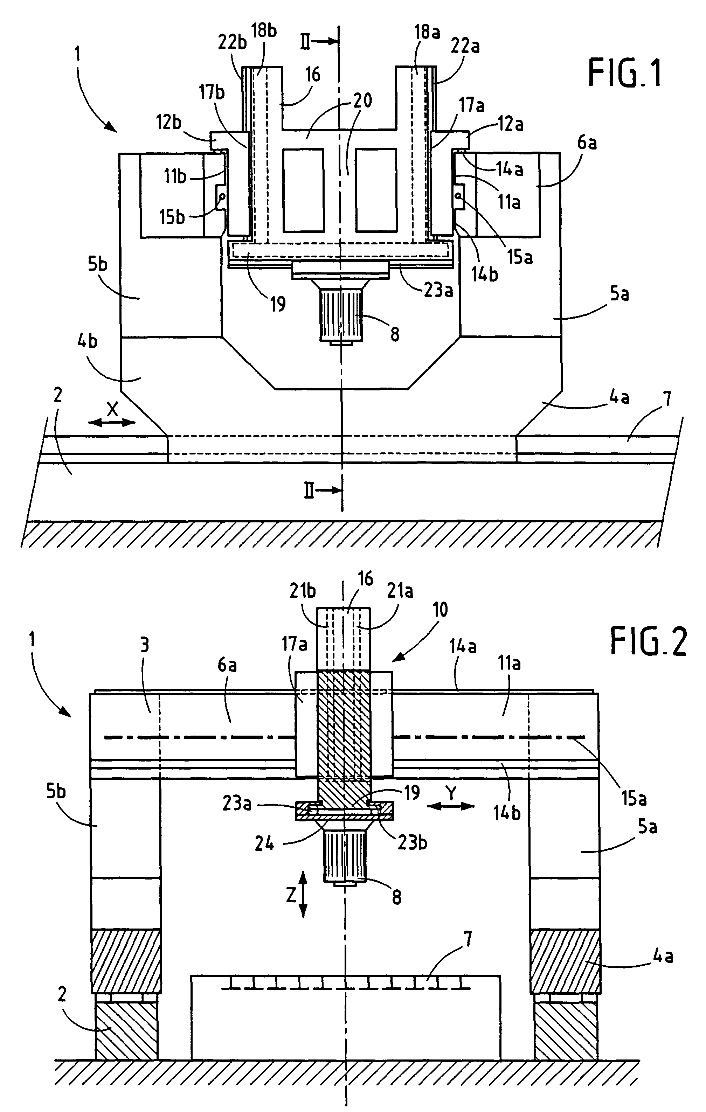

la figure 1 est une vue de côté de la machine-outil à broche verticale et à portique selon l'invention ;
la figure 2 est une coupe de la machine selon l'invention, cette coupe étant prise selon la ligne II-II de la figure 1.

Sur le dessin on a représenté par la référence 1 une fraiseuse à broche verticale et à portique, qui comporte, de manière connue, un banc rigide 2 sur lequel est monté mobile, selon un axe X, un portique 3 qui présente deux montants verticaux 4a, 4b terminés à leur partie supérieure par deux berceaux 5a, 5b espacés dans la direction de l'axe X, et deux poutres parallèles 6a, 6b fixées respectivement sur les berceaux avant 5a des deux montants 4a, 4b et sur les berceaux arrières 5b de ces montants. Les poutres 6a, 6b définissent un axe transversal Y perpendiculaire à l'axe X, et constituent ensemble ce que l'on appelle communément la traverse supérieure du portique 3. Une chaîne cinématique traditionnelle permet le déplacement du portique 3. La référence 7 représente une table de support de la pièce à usiner, et la référence 8 représente une broche porte-outil qui est susceptible de tourner autour d'un axe vertical Z, et qui est montée sur les poutres 6a et 6b par des moyens de montage 10 de telle manière que la broche porte-outil 8 puisse se déplacer selon les axes Y et Z ainsi que dans une certaine mesure selon l'axe X sans déplacement du portique 3. Une commande numérique, non représentée sur le dessin, commande le déplacement de la broche porte-outil 8 par rapport au portique 3 selon les axes X, Y et Z.

Les poutres 6a et 6b présentant deux faces internes en vis-à-vis, dénommées respectivement 11a pour la poutre 6a et 11b pour la poutre 6b.

Les moyens de montage 10 comportent deux chariots 12a, 12b disposés respectivement sur les faces en vis-à-vis 11a, 11b des poutres 6a, 6b. Ces chariots 12a, 12b sont montés coulissants au moyens de glissières 14a, 14b parallèles à l'axe Y et sont entraînés au moyen de deux chaînes cinématiques rigides 15a, 15b parfaitement synchronisées par la commande numérique.

Les deux chariots 12a et 12b entraînent et guident, dans la direction de l'axe Y, un porte-cuirasse 16 disposé entre les faces en vis-à-vis 17a, 17b des chariots 12a, 12b. Le porte-cuirasse 16 présente deux ailes verticales 18a, 18b perpendiculaires à l'axe X et qui s'étendent au-dessus d'une base inférieure 19 disposée sous les faces inférieures des poutres 6a, 6b.

Des éléments de rigidification 20 relient les ailes 18a, 18b entre elles et avec la partie médiane de la base inférieure 19. Ces éléments de rigidification sont constitués par des entretoises, par exemple, ou par des plaques rigides. Les ailes verticales 18a, 18b sont montées coulissantes respectivement sur les faces en vis-à-vis 17a, 17b des chariots 12a, 12b, au moyen de glissières verticales 21a, 21b parallèles à l'axe Z, et sont entraînées par rapport aux chariots 12a, 12b par deux chaînes cinématiques rigides 22a, 22b parfaitement synchronisées par la commande numérique.

La base inférieure 19 du porte-cuirasse 16 porte des glissières 23a, 23b parallèles à l'axe X qui assurent le guidage d'une cuirasse 24 sur laquelle est montée rotative la broche porte-outil 8. Le déplacement de la cuirasse 24 par rapport au porte-cuirasse 16 est réalisé par une chaîne cinématique rigide, en soi connue, commandée par la commande numérique.

La structure des moyens de montage 10 décrite ci-dessus permet de déplacer la broche porte-outil 8 dans un espace tridimensionnel sans déplacer le portique 3. Le volume de cet espace est défini par le déplacement maximum selon l'axe des Y des chariots 12a et 12b, le déplacement maximum selon l'axe Z du porte-cuirasse 16 et le déplacement maximum dans la direction de l'axe des X de la cuirasse 24 par rapport au porte cuirasse 16. Le déplacement de la cuirasse seule 24 dans la direction de l'axe des X peut être réalisé avec une grande avance et avec une grande accélération du fait de la faible masse de la cuirasse 24.

De plus, la disposition du porte-cuirasse 16 entre les chariots 12a, 12b permet de s'affranchir de la configuration en U de FR-A-2 715 336. Il est notamment possible de le rendre extrêmement rigide tout en conservant une masse faible. Ce gain de masse permet de déplacer l'outil avec une grande avance et avec une grande accélération dans la direction de l'axe des Y. De plus, l'amélioration de la rigidité favorise un usinage de précision.

## Revendications

1. Machine-outil comportant un banc rigide (2), un portique (3) présentant deux montants reliés par une traverse supérieure ayant deux faces espacées dans la direction de l'axe X, des moyens pour déplacer le portique (3) sur ledit banc (2) selon l'axe X, deux chariots (12a, 12b) disposés respectivement sur lesdites faces espacées de la traverse et mobiles selon l'axe Y transversal, un porte-cuirasse (16) supporté par lesdits chariots (12a, 12b) et mobile selon l'axe Z vertical, une cuirasse (24) montée sur ledit porte-cuirasse (16) de manière mobile selon l'axe X, une broche porte outil (8) portée par ladite cuirasse (24) et susceptible de tourner autour de l'axe Z, et une commande numérique pour commander les déplacements synchronisés des deux chariots (12a, 12b) selon l'axe Y, le déplacement dudit porte-cuirasse (16) selon l'axe Z et le déplacement de ladite cuirasse (24) par apport audit porte-cuirasse (16) selon l'axe X, afin de permettre un usinage rapide et précis dans une zone tridimensionnelle limitée sans déplacement du portique (3),
**caractérisée par le fait que** ladite traverse est constituée de deux poutres parallèles (6a, 6b) espacées dans la direction de l'axe X, lesdites deux poutres présentant des faces internes (11a, 11b) en vis-à-vis et **par le fait que** lesdits chariots (12a, 12b) sont disposés respectivement sur lesdites faces internes (11a, 11b) et de part et d'autre dudit porte-cuirasse (16).

2. Machine-outil selon la revendication 1, **caractérisée par le fait que** le porte-cuirasse (16) présente deux ailes (18a, 18b) verticales perpendiculaires à l'axe X, s'étendant à partir d'une base inférieure (19), et reliées par des éléments de rigidification (20), lesdites deux ailes (18a, 18b) étant montées coulissantes respectivement sur les faces (17a, 17b) en vis-à-vis desdits deux chariots (12a, 12b) et entraînées en synchronisme par la commande numérique, et la cuirasse (24) est montée coulissante sur ladite base inférieure (19).

## Patentansprüche

1. Werkzeugmaschine mit einem starren Bett (2), einem Portal (3), das zwei Ständer aufweist, die durch eine obere Traverse verbunden sind, welche zwei in der Richtung der X-Achse beabstandete Stirnflächen aufweist, Mitteln, um das Portal (3) auf dem Bett (2) längs der X-Achse zu bewegen, zwei Schlitten (12a, 12b) die an je einer der beabstandeten Stirnflächen der Traverse angeordnet und längs der querliegenden Y-Achse beweglich sind, einem Hauptschlittenträger (16), der von den beiden Schlitten (12a, 12b) getragen wird und längs der senkrechten Z-Achse beweglich ist, einem Hauptschlitten (24), der auf dem Hauptschlittenträger (16) längs der X-Achse beweglich angeordnet ist, einer Werkzeugträgerspindel (8), die von dem Hauptschlitten (24) getragen wird und um die Z-Achse drehbar ist, und einer numerischen Steuerung, um die synchronisierten Bewegungen der beiden Schlitten (12a, 12b) längs der Y-Achse, die Bewegung des Hauptschlittenträgers (16) längs der Z-Achse und die Bewegung des Hauptschlittens (24) in Bezug auf den Hauptschlittenträger (16) längs der X-Achse zu steuern und somit eine schnelle und genaue Bearbeitung in einem begrenzten dreidimensionalen Bereich ohne Bewegung des Portals (3) zu ermöglichen,
**dadurch gekennzeichnet dass** die Traverse von zwei in Richtung der X-Achse beabstandeten parallelen Trägern (6a, 6b) gebildet ist, wobei diese beiden Träger einander zugewandte innere Stirnflächen (11a, 11b) aufweisen, und dass die Schlitten (12a, 12b) an je einer dieser inneren Stirnflächen (11a 11b) und auf je einer Seite des Hauptschlittenträgers (16) angeordnet sind.

2. Werkzeugmaschine nach Anspruch 1 **dadurch gekennzeichnet dass** der Hauptschlittenträger (16) zwei senkrechte, zur X-Achse rechtwinklige Flügel (18a, 18b) aufweist, die sich ausgehend von einer unteren Basis (19) erstrecken und durch Versteifungselemente (20) verbunden sind, wobei diese beiden Flügel (18a, 18b) verschiebbar an den einander gegenüberliegenden Stirnflächen (17a, 17b) der beiden Schlitten (12a, 12b) angebracht und durch die numerische Steuerung synchron angetrieben sind, und dass der Hauptschlitten (24) verschiebbar an der unteren Basis (19) angebracht ist.

## Claims

1. A machine tool comprising a rigid bench (2), a gantry (3) having two uprights interconnected by a top cross-member having two faces spaced apart in the direction of an X axis, means for moving the gantry (3) on said bench (2) along the X axis, two carriages (12a, 12b) disposed respectively on said spaced-apart faces of the cross-member and movable along a transverse Y axis, a cursor-carrier (16) supported by said carriages (12a, 12b) and movable along a vertical Z axis, a cursor (24) mounted on said cursor-carrier (16) and movable along the X axis, a tool-carrier spindle (8) carried by said cursor (24) and capable of rotating about the Z axis, and a numerical control system for controlling synchronized movements of the two carriages (12a, 12b) along the Y axis, movement of said cursor-carrier (16) along the Z axis, and movement of said cursor (24) relative to said cursor-carrier (16) along the X axis, thereby enabling machining to be performed quickly and accurately in a limited three-dimensional zone without moving the gantry (3),
**characterised by** the fact that said cross-member is constituted by two parallel beams (6a, 6b) that are spaced apart in the X axis direction, said two beams having facing inside faces (11a, 11b), and by the fact that said carriages (12a, 12b) are disposed respectively on said inside faces (11a, 11 b) on either side of said cursor-carrier (16).

2. A machine tool according to claim 1, **characterised by** the fact that the cursor-carrier (16) has two vertical flanges (18a, 18b) perpendicular to the X axis, extending up from a bottom web (19), and interconnected by stiffening elements (20), said two flanges (18a, 18b) being mounted to slide respectively on the facing faces (17a, 17b) of said two carriages (12a, 12b) and being driven synchronously by the numerical control system, and the cursor (24) is mounted to slide on said bottom web (19).
